# EUROPEAN PATENT APPLICATION

(11) **EP 4 692 535 A1**
(43) Date of publication of application: **11.02.2026**
(21) Application number: 24193261.5
(22) Date of filing: 07.08.2024
(51) Int. Cl.: F03D 3/04, F03D 9/11, F03D 9/25, F03D 9/34, F03D 1/04, F03D 9/00

(54) **ARRANGEMENT FOR URBAN LIGHT POSTS**

(71) Applicant: Aliyarichermahini, Maryam, 00990 Helsinki (FI); Karami, Majid, 00990 Helsinki (FI)
(72) Inventor: Aliyarichermahini, Maryam, 00990 Helsinki (FI); Karami, Majid, 00990 Helsinki (FI)
(74) Representative: Galbaian S.Coop.

(57) **Abstract**

The invention relates to an arrangement for an urban light post. The arrangement (100) comprises coupling means (4) for being coupled to a light post, at least one electricity generating system (1) for generating electrical power from a renewable energy source, a lighting device (5) and an advertising device (3). The electricity generating system (1) comprises a vertical-axis wind turbine and is connected to at least one of said devices (3, 5). The electricity generating system (1) comprises a vertical conduit, some vertical apertures (1.3) distributed around the vertical conduit and communicated with the vertical conduit, and a generation assembly below the vertical conduit comprising a central shaft, several blades joined to the central shaft and a generator associated to the central shaft. The central vertical conduit comprises an air outlet facing the generation assembly (1.4).

## Description

### TECHNICAL FIELD

The present invention relates to arrangements for urban light posts.

### PRIOR ART

Urban light posts with additional arrangements coupled to them are known. Some of the known arrangements comprise at least an additional lighting device for providing further illumination, advertising means to show any required information or advertisement, and an electricity generating system configured for generating electrical power from sun. The electricity generating system is connected to the additional lighting device in order to supply electrical energy to said lighting device to provide the additional illumination, and/or to the advertising means.

Further, thanks to the electricity generating system, the arrangement can also be provided with further specifications and functions. The arrangement can comprise for example a battery to store at least part of the generated electrical energy, a control unit supplied with at least part of the generated electrical energy for providing controlled functions, and a wireless communication module to allow the arrangement to be externally accessed and then, to be externally controlled. These features make the arrangement smart.

However, one of the problems in such arrangements is that the electric generation of the electricity generating system is limited to sun conditions, said generation being null or very reduced depending on weather conditions and at nights. Therefore, arrangements comprising a wind power generator are also known, as the one described in KR2008079386A.

KR2008079386A discloses an arrangement for being coupled to an urban light post. The arrangement comprises coupling means for being coupled to a light post, a wind power generator, a lighting device for providing the required illumination, and an advertising device.

The wind power generator comprises a vertical-axis wind turbine and is electrically connected to the lighting device and to the advertising device to supply electrical power to said devices.

### DISCLOSURE OF THE INVENTION

The object of the invention is to provide an arrangement for an urban light post, as defined in the claims.

The arrangement comprises coupling means for being coupled to a light post, at least one electricity generating system configured for generating electrical power from a renewable energy source, a lighting device and an advertising device. The electricity generating system is connected to at least one device among the lighting device and the advertising device, such that the electricity generating system is configured to supply electrical power at least to said device and the light post to which the arrangement is coupled is provided with further functions in an easy way, at the same time as said further functions can be autonomous as they do not require external power for example (external from the arrangement).

The electricity generating system comprises a vertical-axis wind turbine, it being configured for generating electricity from wind with a compact design.

The electricity generating system comprises a central vertical conduit, a plurality of apertures, preferably vertical apertures, distributed around the central vertical conduit and communicated with the inside of the central vertical conduit and with the outside (with the environment), and a generation assembly arranged below the central vertical conduit. The generation assembly comprises a central shaft comprising an axis, a plurality of blades linked to the central shaft, said blades and the central shaft being able to rotate in respect of the axis, and a generator associated to the central shaft, such that the generator is configured for generating electricity from the rotary movement of the central shaft. The central vertical conduit comprises an air outlet facing the generation assembly, so that the air entering the central vertical conduit through the apertures reaches easily the blades to cause them to rotate together with the shaft in respect of the axis of the shaft.

Said design of the electricity generating system allows to obtain a compact vertical-axis wind turbine that can generate electricity upon receiving air flowing from any direction (thanks to the distribution of the apertures) and in a very efficient way as all the air received by the vertical-axis wind turbine is derived towards the central vertical conduit and is concentrated against the blades from said central vertical conduit. Thus, a greater amount of the air that hits the turbine can be used to generate electricity, and thanks to the redirection of the air, said use requires less space and smaller blades, which makes the electricity generating system more economic and easier to transport and to handle. In addition, the generation assembly is prevented from being damaged in a greater extend, when strong winds are present for example, as the wind does not impact directly in the more sensitive elements of said generation assembly (the blades, the shaft and the generator for example).

These and other advantages and features of the invention will become apparent in view of the figures and the detailed description of the invention.

### DESCRIPTION OF THE DRAWINGS

Figure 1 shows a preferred embodiment of an arrangement according to the invention.
Figure 2 shows the arrangement of figure 1, coupled to an urban light post.
Figure 3 shows a vertical-axis wind turbine of the arrangement of figure 1.
Figure 4 shows an air channel of the arrangement of figure 1.
Figure 5 shows a wind absorption member of the arrangement of figure 1.

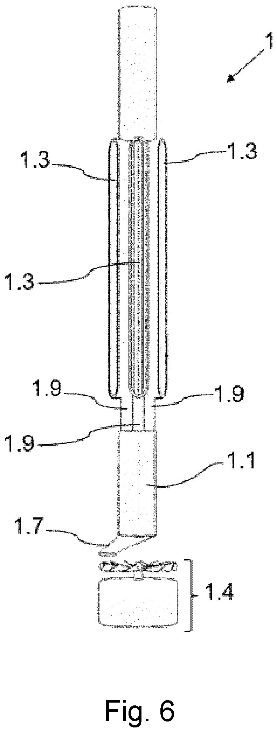

Figure 6 shows the distribution of the air channels of the arrangement of figure 1.
Figure 7 shows a lighting device of the arrangement of figure 1, with a light pump adjusted in a position.
Figure 8 shows the lighting device of figure 7, with the light pump adjusted in another position.
Figure 9 shows the arrangement of figure 1, with billboard holders in one determined position.
Figure 10 is an exploded view of the arrangement of figure 1.

### DETAILED DISCLOSURE OF THE INVENTION

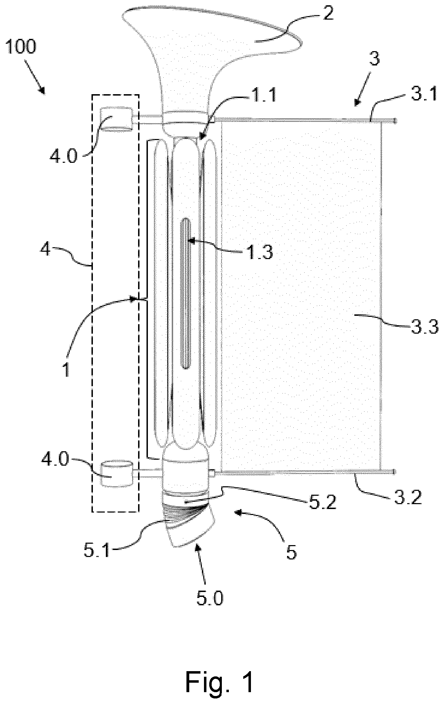

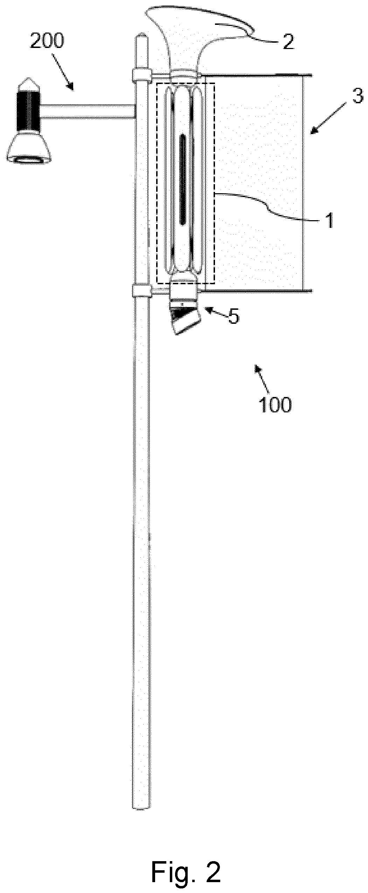

The proposed arrangement 100, shown as an example in figure 1, is adapted for being coupled to an urban light post 200 as shown in figure 2. The arrangement 100 comprises coupling means 4 for being coupled to the light post 200, said coupling means 4 comprising at least one bracket 4.0, preferably a plurality of brackets 4.0 vertically distributed. The arrangement 100 is fully portable and can be then coupled to any type of base (light post 200) thanks to the coupling means 4, at any direction and at any heigh of said base, said arrangement 100 being then very versatile.

The arrangement 100 comprises at least one electricity generating system 1 configured for generating electrical power from a renewable energy source, a lighting device 5 for providing illumination and an advertising device 3 for allowing to show the required advertisement or information. The electricity generating system 1 is electrically connected to at least one device among the lighting device 5 and the advertising device 3, preferably to both devices 3 and 5 as in the preferred embodiment, such that the electricity generating system 1 is configured to supply electrical power to the connected devices 3 and/or 5.

Preferably, as occurs in the preferred embodiment, the electricity generating system 1 is arranged between the advertising device 3 and the coupling means 4, the advertising device 3 is arranged at one side of the electricity generating system 1, the coupling means 4 are arranged at the opposite side of the electricity generating system 1, and the lighting device 5 is arranged below the electricity generating system 1 (below the generator assembly 1.4 of the electricity generating system 1). Said disposal makes the arrangement 100 compact.

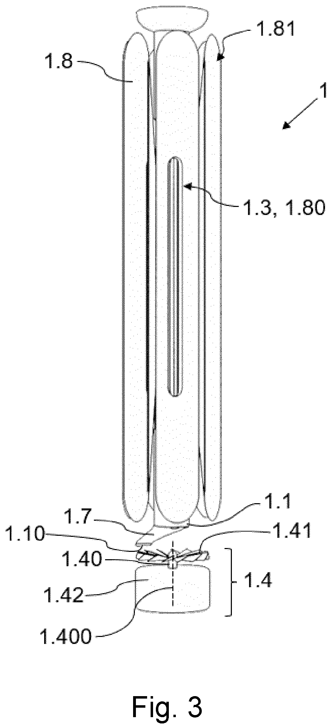

The electricity generating system 1, as shown in figure 3, comprises a vertical-axis wind turbine with a central vertical conduit 1.1, a plurality of apertures 1.3, preferably vertical apertures 1.3, distributed around the central vertical conduit 1.1 and communicated with the inside of the central vertical conduit 1.1 and with the environment, and a generation assembly 1.4 arranged below the central vertical conduit 1.1. As the apertures 1.3 are distributed around the central vertical conduit 1.1, the electricity generating system 1 is able to generate electricity with wind flowing from any direction.

The generation assembly 1.4 comprises a central shaft 1.40 with an axis 1.400, a plurality of blades 1.41 joined to the central shaft 1.40 with freedom to rotate in respect of the axis 1.400, and a generator 1.42 associated to the central shaft 1.40, the central vertical conduit 1.1 comprising an air outlet 1.10 facing the generation assembly 1.4. When the blades 1.41 are forced to rotate by the action of air, the central shaft 1.40 also rotates and said rotational movement is converted into electricity by the generator 1.42. As the generation assembly 1.4 is arranged below the central vertical conduit 1.1, the generator 1.42 is not directly exposed to the external environment (either to the wind), and the electricity generating system 1 is protected from weather conditions and can operate efficiently in different weather conditions including cold and freezing environments.

The electricity generating system 1 comprises a deflector 1.7 at the air outlet 1.10 of the central vertical conduit 1.1, to direct the air outputting the central vertical conduit 1.1 towards the part of the blades 1.41 most distant from the central shaft 1.40. Applying air on said outermost part of the blades 1.41 causes the blades 1.41 to rotate more quickly compared to the case in which the air impacts over other parts of the blades, due to physical forces. This causes to obtain a more efficient electricity generating system 1 as it is able to generate more electricity with a same amount of air.

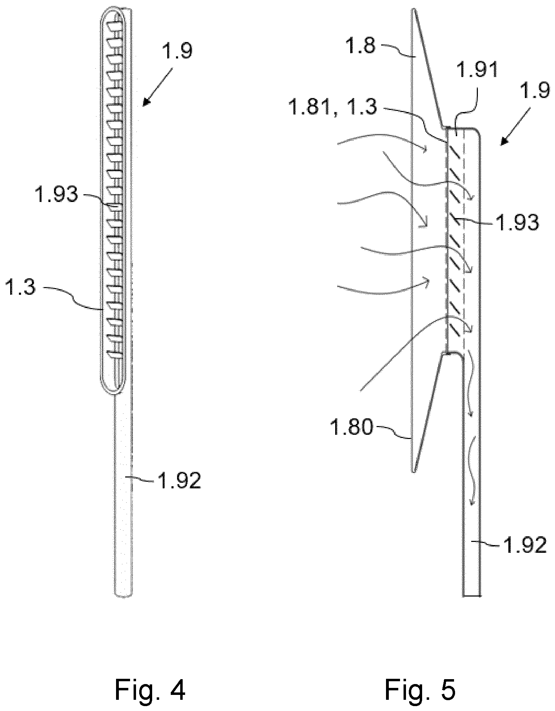

The electricity generating system 1 comprises a respective air channel 1.9 extending between each aperture 1.3 and the air outlet 1.10 of the central vertical conduit 1.1, as shown in figure 4. The electricity generating system 1 comprises then a plurality of air channels 1.9 distributed around the central vertical conduit 1.1. Each air channel 1.9 is configured to redirect downstream the air entering said air channel 1.9 through the corresponding aperture 1.3. Said redirection allows, at least, to increase the speed of the air reaching the air outlet 1.10, the force impacting the blades 1.41 being increased and the efficiency of the electricity generating system 1 being then also increased. An air channel 1.9 comprises a horizontal first section 1.91 extending from the corresponding aperture 1.3 and a vertical second section 1.92 in connection with the first section 1.91, as shown in figure 5, and at least one deflector 1.93 arranged inside the first section 1.91, preferably a plurality of deflectors 1.93 vertically distributed, to redirect downstream the air entering the air channel 1.9 through the corresponding aperture 1.3. Inside an air channel 1.9 the air flows from the first section 1.91 to the second section 1.92.

The electricity generating system 1 can comprise a respective wind absorption member 1.8 for each air channel 1.9, a wind absorption member 1.8 being connected in series with the corresponding air channel 1.9 as shown in figure 5. The wind absorption member 1.8 comprises an outlet mouth 1.81 with a shape equal to the shape of the corresponding aperture 1.3 and an inlet mouth 1.80 comprising an area greater than an area of the outlet mouth 1.81 and receiving the wind. Thanks to the inlet mouth 1.80 it is allowed to receive a great amount of air from the wind to be conducted towards the corresponding aperture 1.3 and at any intensity, and said air is concentrated towards said aperture 1.3 due to the reduction of the area of the wind absorption member 1.8, a reliable performance being ensured.

When the electricity generating system 1 is electrically connected to the lighting device 5 and is then configured to supply electrical energy to the lighting device 5, as occurs in the preferred embodiment, the arrangement 100 preferably comprises a control unit 6. The control unit 6 is configured for being supplied with electrical power from the electricity generating system 1 and is communicated with the lighting device 5 and configured for controlling the illumination to be provided by the lighting device 5. Therefore, the arrangement can also be a smart arrangement 100. The control unit 6 can comprises a controller, a processor, a FPGA or any other device with computation capability

Preferably, as in the preferred embodiment, the lighting device 5 comprises a light sensor 5.2 for detecting the illumination of the surroundings (or environment) of the light post 200 where the arrangement 100 is coupled. The light sensor 5.2 is communicated with the control unit 6, and the control unit 6 is configured to take into account the detection carried out by the light sensor 5.2 for controlling the illumination to be provided by the lighting device 5.

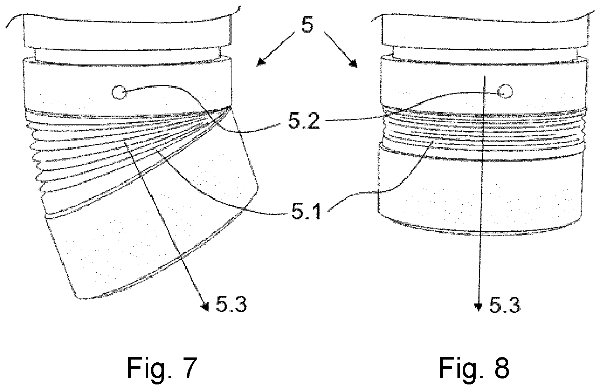

The lighting device 5 comprises at least one light lamp 5.0 which can be switched on and off by the control unit 6, and that points in a determined direction 5.3, said determined direction 5.3 being preferably a downward direction. The lighting device 5 can also comprise a light angle adjuster 5.1 arranged between the first electricity generating system 1 and the light lamp 5.0 and configured to adjust the orientation of the light lamp 5.0 when actuated, in order to adjust the determined direction 5.3. Therefore, the determined direction 5.3 can be adjusted as required (see two examples in figures 7 and 8), and the illumination provided by the light lamp 5.0 can be adjusted and controlled in a greater extend, ensuring a high-quality ambient lighting.

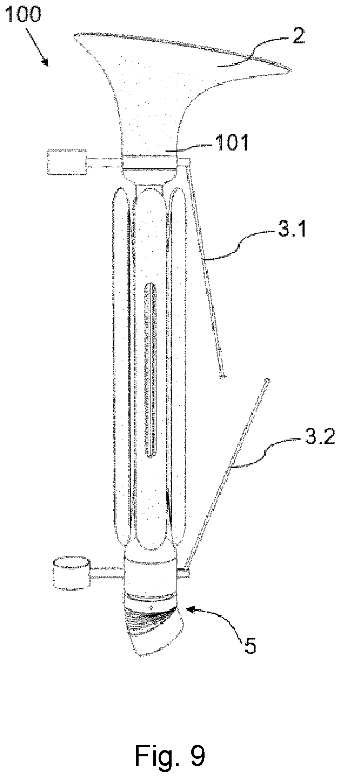

The advertising device 3 comprises an upper billboard holder 3.1 joined to a frame 101 of the arrangement 100, and a lower billboard holder 3.2 joined to the frame 101 and vertically distanced from the upper billboard holder 3.1, such that a billboard 3.3 can be arranged between both billboard holders 3.1 y 3.2 and can be held by both billboard holders 3.1 and 3.2. The upper billboard holder 3.1 and the lower billboard holder 3.2 are joined to the frame 101 in a pivotable manner, so they can be arranged in different positions as the one shown in figures 1 and 2 and the one shown in figure 9. This flexibility allows to retract the holders 3.1 and 3.2 when required, for example for transporting and manipulating the arrangement 100, or even for protecting the holders 3.1 and 3.2 when no billboard 3.3 is being used. In addition, the advertising space can be used as required in an easy way, as amending the advertisement, for example, can be done very easily.

When the electricity generating system 1 is electrically connected to the advertising device 3 and configured to supply electrical energy to the advertising device 3, as occurs in the preferred embodiment, the advertising device 3 can further comprise an actuator 3.4 configured to cause the billboard holders 3.1 and 3.2 to pivot in a controlled and automated manner, said actuator 3.4 being configured to be supplied with electrical power from the electricity generating system 1 to make possible its actuation.

In other embodiments the billboard 3.3 could also be an electrical display device such as a screen, in order to show the required information electronically. The information to be shown in the billboard 3.3 could then be controlled through the control unit 6 and the electrical display would be electrically supplied by the electricity generating system 1.

In some embodiments, as in the preferred one, the arrangement 100 also comprises an additional electricity generating system 2 configured to generate electrical power from a renewable energy source different from the renewable energy source of the first electricity generating system 1, preferably sun. The additional electricity generating system 2 is also electrically connected to at least one device selected among the lighting device 5 and the advertising device 3, such that the additional electricity generating system 2 is configured to supply electrical power at least to said device 3 or 5. Preferably, as in the preferred embodiment, the lighting device 5 and the advertising device 3 are electrically supplied by both electricity generating systems 1 and 2. Preferably, the additional electricity generating system 2 is arranged above the first electricity generating system 1 as shown in figures.

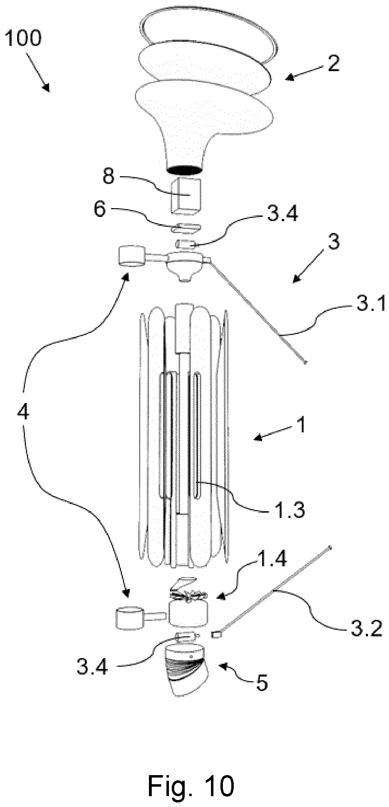

The arrangement 100 can also comprise, as in the preferred embodiment and as shown in figure 10, a battery 8 connected to at least one electricity generating system 1 or 2 of the arrangement, or to both electricity generating systems 1 and 2 as in the preferred embodiment, to store electricity generated by the connected electricity generating system(s). This permits the arrangement 100 to be maintained operative even in situations in which no sun and no wind is present.

The arrangement 100 can also comprise, as in the preferred embodiment and as shown in figure 10, a wireless communication module 7. Said wireless communication module 7 is connected to the control unit 6, such that the arrangement 100 can also be controlled or programmed externally through said wireless communication module 7, entering the required instruction or programs to the control unit 6 through said wireless communication module 7.

Thus, the arrangement 100 is completely independent or autonomous as it comprises all the required components and generates the electrical power required to operate said components, no external structures or components being needed.

Summing up, the arrangement 100 offers a more efficient, independent (autonomous) and versatile solution for energy generation and advertising, suitable for a wide range of applications and weather conditions.

## Claims

1. Arrangement for an urban light post, the arrangement (100) comprising coupling means (4) for being coupled to a light post (200), at least one electricity generating system (1) configured for generating electrical power from a renewable energy source, a lighting device (5) for providing the required illumination and an advertising device (3), the electricity generating system (1) comprising a vertical-axis wind turbine and being electrically connected to at least one device selected among the lighting device (5) and the advertising device (3), such that the electricity generating system (1) is configured to supply electrical power at least to said device (3, 5), **characterised in that** the electricity generating system (1) comprises a central vertical conduit (1.1), a plurality of apertures (1.3), preferably vertical apertures (1.3), distributed around the central vertical conduit (1.1) and communicated with the inside of the central vertical conduit (1.1) and with the environment, and a generation assembly (1.4) arranged below the central vertical conduit (1.1), the generation assembly (1.4) comprising a central shaft (1.40) with an axis (1.400), a plurality of blades (1.41) joined to the central shaft (1.40) with freedom to rotate in respect of the axis (1.400), and a generator (1.42) associated to the central shaft (1.40), the central vertical conduit (1.1) comprising an air outlet (1.10) facing the generation assembly (1.4).

2. Arrangement according to claim 1, wherein the electricity generating system (1) comprises a deflector (1.7) at the air outlet (1.10) of the central vertical conduit (1.1) to direct the air outputting the central vertical conduit (1.1) towards the part of the blades (1.41) most distant from the central shaft (1.40).

3. Arrangement according to claim 1 or 2, wherein the electricity generating system (1) comprises a respective air channel (1.9) extending between each aperture (1.3) and the air outlet (1.10) of the central vertical conduit (1.1), said air channels (1.9) being configured to redirect downstream the air entering said air channels (1.9) through the corresponding aperture (1.3).

4. Arrangement according to claim 3, wherein each air channel (1.9) comprises a horizontal first section (1.91) extending from the corresponding aperture (1.3) and a vertical second section (1.92) in series connection with the first section (1.91), and at least one deflector (1.93) arranged inside the first section (1.91) to redirect downstream the air entering the air channel (1.9) through the corresponding aperture (1.3).

5. Arrangement according to claim 4, wherein each air channel (1.9) comprises a plurality of deflectors (1.93) vertically distributed.

6. Arrangement according to any of claims 3 to 5, wherein the electricity generating system (1) comprises a respective wind absorption member (1.8) for each air channel (1.9) and connected in series with the corresponding air channel (1.9), the wind absorption member (1.8) comprising an outlet mouth (1.81) with a shape equal to the shape of the corresponding aperture (1.3) and an inlet mouth (1.80) comprising an area greater than an area of the outlet mouth (1.81) and receiving the air from the wind, the wind absorption member (1.8) being configured to concentrate the air entering said wind absorption member (1.8) towards the aperture (1.3).

7. Arrangement according to any of claims 1 to 6, wherein the electricity generating system (1, 2) is electrically connected to the lighting device (5) and configured to supply electrical energy to the lighting device (5).

8. Arrangement according to claim 7, comprising a control unit (6) configured for being supplied with electrical power from the electricity generating system (1), the control unit (6) being communicated with the lighting device (5) and being configured for controlling the illumination to be provided by the lighting device (5).

9. Arrangement according to claim 8, wherein the lighting device (5) comprises a light sensor (5.2) for detecting the illumination of the surroundings of the light post (200) and communicated with the control unit (6), the control unit (6) being configured to take into account the detection carried out by the light sensor (5.2) for controlling the illumination to be provided by the lighting device (5).

10. Arrangement according to any of claims 1 to 9, wherein the lighting device (5) is arranged below the electricity generating system (1) and comprises at least one light lamp (5.0) pointing in a determined direction (5.3), said determined direction (5.3) being preferably a downward direction.

11. Arrangement according to claim 10, wherein the lighting device (5) comprises a light angle adjuster (5.1) arranged between the first electricity generating system (1) and the light lamp (5.0) and configured to adjust the orientation of the light lamp (5.0) when actuated, in order to adjust the determined direction (5.3).

12. Arrangement according to any of claims 1 to 11, wherein the electricity generating system (1) is electrically connected to the advertising device (3) and configured to supply electrical energy to the advertising device (3), the advertising device (3) comprising an upper billboard holder (3.1) joined to a frame (101) of the arrangement (100), a lower billboard holder (3.2) joined to the frame (101) and vertically distanced from the upper billboard holder (3.1), such that a billboard (3.3) can be arranged between both billboard holders (3.1, 3.2) and can be held by both billboard holders (3.1, 3.2), the upper billboard holder (3.1) and the lower billboard holder (3.2) being joined to the frame (101) in a pivotable manner, the advertising device (3) further comprising an actuator (3.4) configured to cause the billboard holders (3.1, 3.2) to pivot and configured to be supplied with electrical power from the electricity generating system (1).

13. Arrangement according to any of claims 1 to 12, wherein the electricity generating system (1) is arranged between the advertising device (3) and the coupling means (4), the advertising device (3) being arranged at one side of the electricity generating system (1) and the coupling means (4) being arranged at the opposite side of the electricity generating system (1).

14. Arrangement according to any of claims 1 to 13, comprising an additional electricity generating system (2) configured to generate electrical power from a renewable energy source different from the renewable energy source of the first electricity generating system (1), preferably sun, the additional electricity generating system (2) being electrically connected to at least one device selected among the lighting device (5) and the advertising device (3), such that the additional electricity generating system (2) is configured to supply electrical power at least to said device (3, 5).

15. Arrangement according to claim 14, wherein the additional electricity generating system (2) is arranged above the first electricity generating system (1).
